# EUROPEAN PATENT APPLICATION

(11) **EP 4 421 290 A1**
(43) Date of publication of application: **28.08.2024**
(21) Application number: 24156336.0
(22) Date of filing: 07.02.2024
(51) Int. Cl.: F01D 5/00, B23D 75/00

(54) **OUT OF CENTER COOLING BORE DRILLING FOR GAS TURBINE ROTOR**

(30) Priority: 22.02.2023 PL 44386223
(71) Applicant: General Electric Technology GmbH, 5400 Baden (CH)
(72) Inventor: TUCKI, Karol, 02-256 Warszawa (PL); STENZ, Valentin, 5400 Baden (CH); SAJDAK, Lukasz, 02-256 Warszawa (PL); KORUS, Mateusz, 02-256 Warszawa (PL)
(74) Representative: Dittmann, Rolf

(57) **Abstract**

The present application provides a cooling bore guide (120) for reaming an enlarged portion (100) into a cooling bore (280) of a rotor (45). The cooling bore guide (120) may include a cutter guide (130) for insertion into the cooling bore (280) and a guide lock (140) for insertion into an adjacent cooling bore (290).

## Description

### TECHNICAL FIELD

The present application and the resultant patent relate generally to gas turbine engines and more particularly relate to systems and methods for out of center reaming of rotor cooling bores for improved overall component lifetime without sacrificing gas turbine efficiency.

### BACKGROUND

Gas turbine engines typically include a compressor, a combustor, a turbine, and an external load such as a generator. A rotor transfers power and rotary motion from the turbine to both the compressor and the external load. The rotor and other components of the gas turbine engine are exposed to high thermal and mechanical stresses. Long-term exposure to these stresses may cause material creep and other types of damage that may cause the rotor and/or other components to fail and/or reduce the useful lifetime of these components and the overall gas turbine engine.

To reduce thermal stresses during gas turbine operations, a cooling medium such as air and the like may be used to cool the gas turbine components. For example, a rotor may have any number of cooling bores formed therein. Over time, differential thermal expansion may cause cracks to appear about the cooling bores. Simply reaming the cooling bores to increase the overall diameter of each cooling bore may address the cracking issue. The increased diameter of the cooling bores, however, may permit the passage of an excess amount of cooling air, thereby having a negative impact on overall gas turbine efficiency.

Moreover, reaming the cooling bores generally requires the rotor to be taken out of service and shipped to specialized workshops. Due to the very limited space between a cooling bore axis and the rotor barrel, there is no possibility to use standard methods for this type of material removal. Given such, a rework generally requires extensive downtime and high transport costs.

### SUMMARY

The present application and the resultant patent thus provide a cooling bore guide for reaming an enlarged portion into a cooling bore of a rotor. The cooling bore guide may include a cutter guide for insertion into the cooling bore and a guide lock for insertion into an adjacent cooling bore.

The present application and the resultant patent further provide a method of method of enlarging a cooling bore in a rotor of a turbine. The method may include the steps of positioning a cutter guide in the cooling bore, positioning a guide lock in an adjacent cooling bore, locking the guide lock within the adjacent cooling bore, inserting a reaming tool within the cutter guide, and reaming the cooling bore to create an off-center enlarged portion.

The present application and the resultant patent further provide a cooling bore guide for reaming an enlarged portion into a cooling bore of a rotor. The cooling bore guide may include a cutter guide having a semicircular shape for insertion into the cooling bore, a guide lock for insertion into an adjacent cooling bore, and a mounting plate for mounting the cutter guide and the guide lock thereon.

These and other features and improvements of this application and the resultant patent will become apparent to one of ordinary skill in the art upon review of the following detailed description when taken in conjunction with the several drawings and the appended claims.

### BRIEF DESCRIPTION OF THE DRAWINGS

Fig. 1 is a schematic diagram of a gas turbine engine including a compressor, a combustor, a turbine, and an external load.
Fig. 2 is a sectional view of a rotor with a cooling bore showing the existing cooling bore and the portion to be enlarged.
Fig. 3 is schematic view of a cooling bore showing the existing cooling bore and the portion to be enlarged.
Fig. 4 is a perspective view of a cooling bore guide as may be described herein.
Fig. 5 is a top plan view of the cooling bore guide of Fig. 4.
Fig. 6 is a perspective view of a cutter guide of the cooling bore guide of Fig. 4
Fig. 7 is a top partial sectional view of the cutter guide of the cooling bore guide of Fig. 4.
Fig. 8 is a top partial sectional view of a guide lock of the cooling bore guide of Fig. 4.
Fig. 9 is a perspective view of the cooling bore guide inserted into adjacent cooling bores of a rotor.
Fig. 10 is a perspective view of a reaming tool inserted into the cooling bore guide.

### DETAILED DESCRIPTION

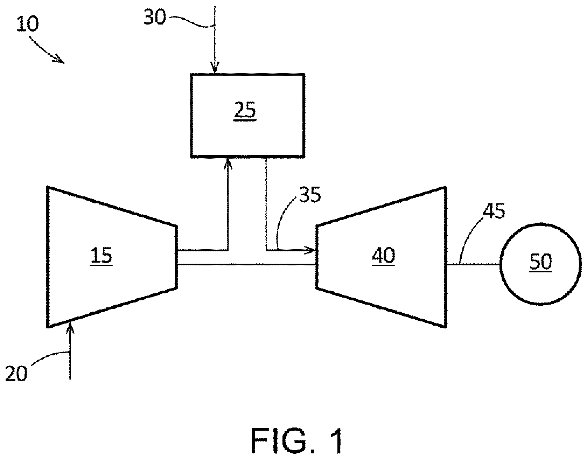

Referring now to the drawings, in which like numerals refer to like elements throughout the several views, Fig. 1 shows a schematic diagram of a gas turbine engine 10 as may be used herein. The gas turbine engine 10 may include a compressor 15. The compressor 15 compresses an incoming flow of air 20. The compressor 15 delivers the compressed flow of air 20 to a number of combustor cans 25. The combustor cans 25 mix the compressed flow of air 20 with a pressurized flow of fuel 30 and ignite the mixture to create a flow of hot combustion gases 35. Although only a single combustor can 25 is shown, the gas turbine engine 10 may include any number of combustor cans 25 positioned in a circumferential array and the like. Alternatively, the combustor 25 may be an annular combustor. The flow of combustion gases 35 is in turn delivered to a turbine 40. The flow of combustion gases 35 drives the turbine 40 to produce mechanical work. The mechanical work produced in the turbine 40 drives the compressor 15 via a rotor 45 and an external load 50 such as an electrical generator and the like.

The gas turbine engine 10 may use natural gas, various types of syngas, liquid fuels, and/or other types of fuels and blends thereof. The gas turbine engine 10 may be any one of a number of different gas turbine engines offered by General Electric Company of Schenectady, New York, including, but not limited to, those such as a GT11N gas turbine engine and the like. The gas turbine engine 10 may be part of a simple cycle or a combined cycle power generation system. The gas turbine engine 10 may have different configurations and may use other types of components. Other types of gas turbine engines also may be used herein. Multiple gas turbine engines, other types of turbines, and other types of power generation equipment also may be used herein together.

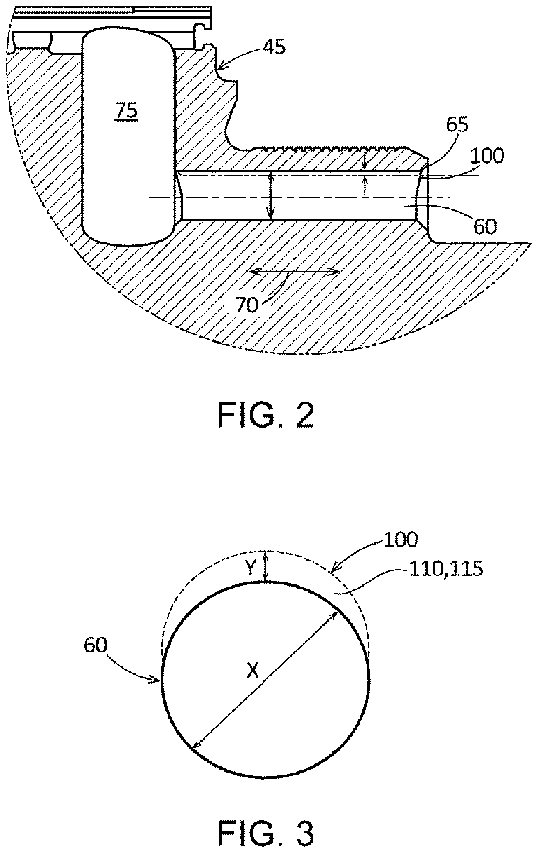

Figs. 2-3 show a portion of the rotor 45. As discussed above, the rotor 45 may have a number of cooling bores 60 formed therein. The cooling bores 60 may extend around a periphery 65 thereof in an axial direction 70 inward towards an internal rotor cavity 75. Any number of the cooling bores 60 may be used herein. A portion of each or several of the cooling bores 60 may be enlarged by a reaming tool and the like to remove or reduce any cracking or other types of damage. By way of example, if the existing cooling bore 60 has a diameter of about X millimeters then an enlarged portion 100 of the cooling bore 60 may be have an enlarged diameter of about Y millimeters, where length Y is about five to about twenty percent of length X. The enlarged diameter herein may vary. The enlarged portion 100 may have a substantial "half moon" shape 110 on an upper side of the cooling bore 60. The enlarged portion 100 thus has an off-center position 115 with respect to the existing cooling bore 60. Other shapes and other configurations may be used herein.

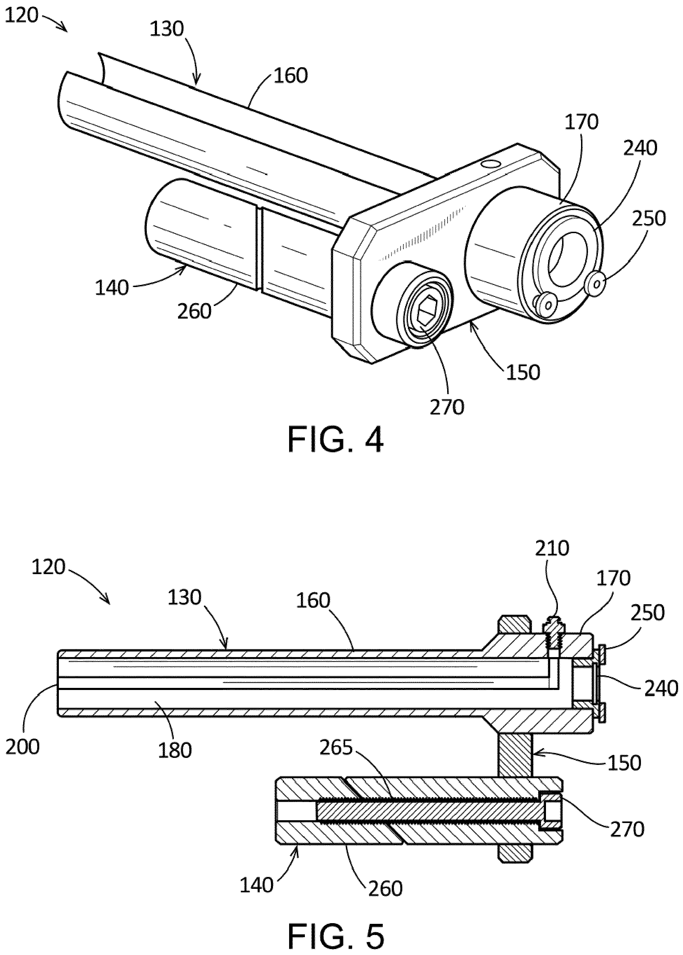

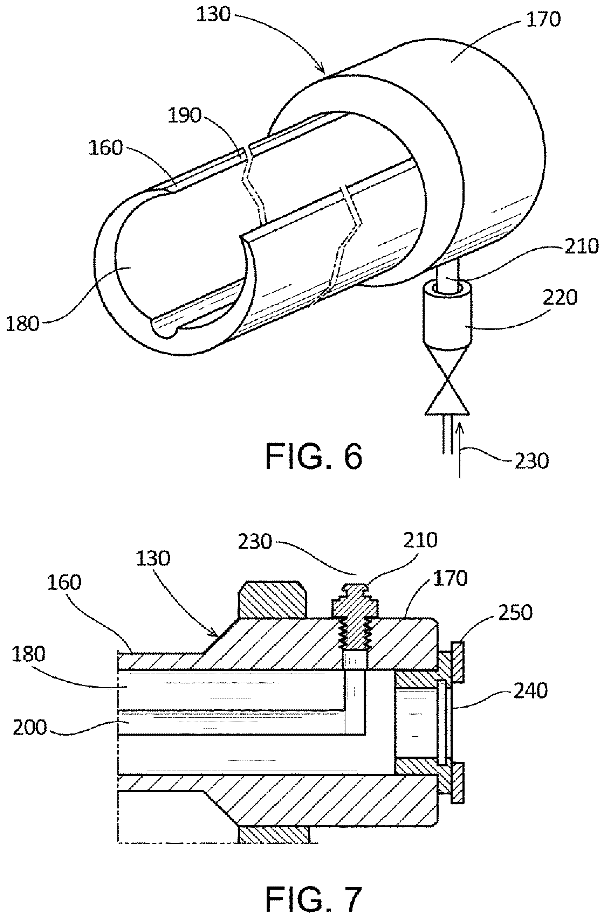

Figs. 4-9 show various views of an exemplary cooling bore guide 120 as may be described herein. The cooling bore guide 120 may be used with a reaming tool (described below) to create precisely the off-center enlarged portion 100 of the cooling bore 60. As is shown in Figs. 4 and 5, the cooling bore guide 120 may include a cutter guide 130, a guide lock 140, and a mounting plate 150. The cutter guide 130 and the guide lock 140 may be separated along the mounting plate 150 by a typical distance between cooling bores 60 around the rotor 45. The cutter guide 130 may be inserted in a first cooling bore 60 and the guide lock 140 may be inserted into an adjacent cooling bore 60. Mounting plates 150 with different dimensions may be used herein to accommodate rotors 45 of differing sizes and/or differing spacing. Other components and other configurations may be used herein.

Figs. 4-7 show the exemplary cutter guide 130 in detail. The cutter guide 130 may include an elongated sleeve 160 extending from a sleeve base 170. The elongated sleeve 160 may be sized to accommodate the length of a typical cooling bore 60. The elongated sleeve 160 may have semicircular trough-like shape 180 with an open top end 190. The semicircular trough-like shape 180 creates the half-moon shape 110 in the enlarged portion 100 of the cooling bore 60. The elongated sleeve 160 includes a groove 200 that extends along a base of the semicircular trough-like shape 180. The depth of the groove 200 may vary. The groove 200 may be in communication with a tube fitting 210 in the sleeve base 170. The tube fitting 210 may be in communication with an air hose 220. The air hose delivers a flow of purge air 230 to the groove 200 so as to push out of the elongated sleeve 160 any debris that may develop during the reaming process. The cutter guide 130 also may include a sleeve bearing 240. The sleeve bearing 240 may be sized to accommodate the size of the reaming tool and/or the cooling bore 60. Differently sized sleeve bearings 240 may be used herein. The sleeve bearing 240 may be held in place via one or more locking screws 250. Other types of locking means may be used herein. Other components and other configurations may be used herein.

Figs. 4, 5, and 8 show the exemplary guide lock 140. The guide lock 140 may include a two piece guide lock sleeve 260 extending from the mounting plate 150. The guide lock sleeves 260 may have an internal thread 265. A guide lock screw 270 may be positioned within the internal thread 265 of the guide lock sleeves 260. The guide lock screw 270 may rotate within the internal thread 265 to expand the guide lock sleeves 260 so as to lock the guide lock 140 into position. Other components and other configurations may be used herein.

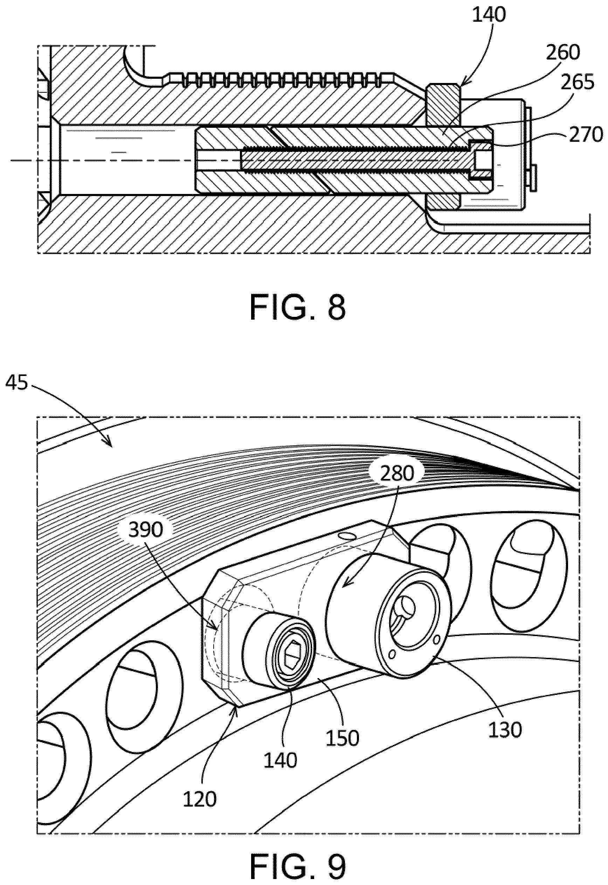

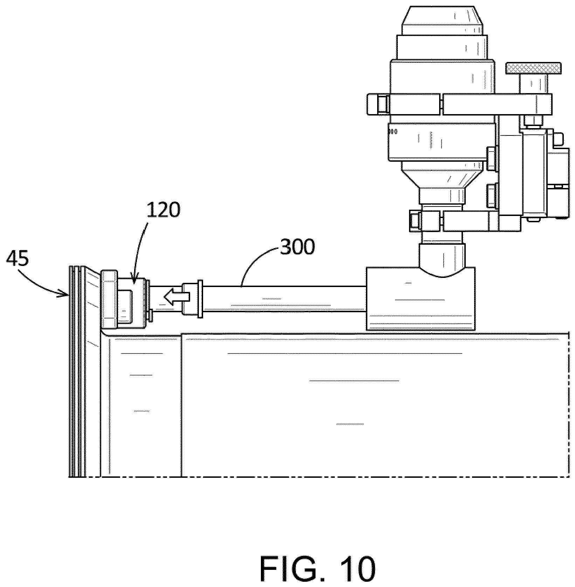

Figs. 9 and 10 show the cooling bore guide 120 in use. Specifically, the cutter guide 130 may be inserted in a first cooling bore 280 and the guide lock 140 may be inserted in an adjacent second cooling bore 290. The cooling bore guide 120 may be used with a reaming tool 300. The reaming tool 300 may be of conventional design. The guide lock 140 may be locked into place within the adjacent second cooling bore 290. A sleeve bearing 240 may be positioned within the sleeve base 170 of the cutter guide 130. The sleeve bearing 240 may be sized to accommodate the reaming tool 300 therein and/or the intended cooling bore 280. The reaming tool 300 and the semicircular trough-like shape 180 of the elongated sleeve 160 may be sized to create the off-center enlarged portion 100 of the cooling bore 60 of the desired size and shape. As is shown in Fig. 10, the reaming tool 300 is inserted into the cutter guide 130 so as to ream precisely the cooling bore 60. Other components and other configurations may be used herein.

As described above, a rework of the rotor 45 generally may be required to remove indications of cracking and the like on the top surface of the cooling bores 60. Such removal extends the overall rotor lifetime and reduces the risk of failure during turbine operations. Current methods, however, require shipping the rotor 45 to a workshop, with associated downtime and transport costs.

With the cooling bore guide 120 described herein, the cutter guide 130 is inserted into the first existing cooling bore 280 to be reamed and may be locked into position with the guide lock 140 being inserted into the adjacent second cooling bore 290. Moreover, the use of the guide lock 140 ensures that no vibrations are generated during the reaming process. The shape of the cutter guide 130 may be selected such that the reaming tool 300 is guided only through the material that to be removed to create the enlarged portion 100, *i.e.,* the off-center top part 115 of the bore 60 where the cracks may appear. Specifically, only the upper part of the cooling bore 60 is reamed to create the enlarged portion 100, while the rest of the cooling bore 280 remains the same.

The cutter guide 130 also is equipped with the groove 200 to allow the purge air 230 to remove debris. The purge air 230 also avoiding excessive wear of the reaming tool 300 so as to obtain the best possible accuracy of the enlarged portion 100. The cooling bore guide 120 thus provides non-concentric or off-center drilling of the cooling bores 60 with the reaming tool 300 without the need of shipping the rotor 45 to specialized workshops, thereby significantly reducing the cost and time spent for the repair.

It should be apparent that the foregoing relates only to certain embodiments of this application and resultant patent. Numerous changes and modifications may be made herein by one of ordinary skill in the art without departing from the general spirit and scope of the invention as defined by the following claims and the equivalents thereof.

Further aspects of the invention are provided by the subject matter of the following clauses:
1. A cooling bore guide for reaming an enlarged portion into a cooling bore of a rotor, comprising a cutter guide for insertion into the cooling bore and a guide lock for insertion into an adjacent cooling bore.
2. The cooling bore guide of any preceding clause, further comprising a mounting plate for mounting the cutter guide and the guide lock thereon.
3. The cooling bore guide of any preceding clause, wherein the cutter guide comprises an elongated sleeve.
4. The cooling bore guide of any preceding clause, wherein the elongated sleeve comprises a semicircular trough-like shape.
5. The cooling bore guide of any preceding clause, wherein the semicircular trough-like shape comprises an open end.
6. The cooling bore guide of any preceding clause, wherein the elongated sleeve comprises a grove therein.
7. The cooling bore guide of any preceding clause, wherein the cutter guide comprises a sleeve base.
8. The cooling bore guide of any preceding clause, wherein the sleeve base comprises a tube fitting in communication with an air hose.
9. The cooling bore guide of any preceding clause, wherein the sleeve base comprises a sleeve bearing therein.
10. The cooling bore guide of any preceding clause, wherein the guide lock comprises a guide locking sleeve.
11. The cooling bore guide of any preceding clause, wherein the guide lock comprises a guide lock screw positioned within the guide locking sleeve.
12. The cooling bore guide of any preceding clause, further comprising a reaming tool positioned within the cutter guide.
13. The cooling bore guide of any preceding clause, wherein the enlarged portion comprises a half moon shape.
14. The cooling bore guide of any preceding clause, wherein the enlarged portion comprises an enlarged diameter of about five to about twenty percent of a diameter of the cooling bore.
15. A method of enlarging a cooling bore in a rotor of a turbine, comprising: positioning a cutter guide in the cooling bore; positioning a guide lock in an adjacent cooling bore; locking the guide lock within the adjacent cooling bore; inserting a reaming tool within the cutter guide; and reaming the cooling bore to create an off-center enlarged portion.
16. A cooling bore guide for reaming an enlarged portion into a cooling bore of a rotor, comprising: a cutter guide for insertion into the cooling bore; the cutter guide comprising a semicircular shape; a guide lock for insertion into an adjacent cooling bore; and a mounting plate for mounting the cutter guide and the guide lock thereon.
17. The cooling bore guide of any preceding clause, wherein the cutter guide comprises an elongated sleeve with an open top end.
18. The cooling bore guide of any preceding clause, wherein the elongated sleeve comprises a grove therein.
19. The cooling bore guide of any preceding clause, wherein the guide lock comprises a guide locking sleeve and a guide lock screw positioned therein.
20. The cooling bore guide of any preceding clause, further comprising a reaming tool positioned within the cutter guide.

## Claims

1. A cooling bore guide (120) for reaming an enlarged portion (100) into a cooling bore (280) of a rotor (45), comprising:
a cutter guide (130) for insertion into the cooling bore (280); and
a guide lock (140) for insertion into an adjacent cooling bore (290).

2. The cooling bore guide (120) of claim 1, further comprising a mounting plate (150) for mounting the cutter guide (130) and the guide lock (140) thereon.

3. The cooling bore guide (120) of claim 1, wherein the cutter guide (130) comprises an elongated sleeve (160).

4. The cooling bore guide (120) of claim 3, wherein the elongated sleeve (160) comprises a semicircular trough-like shape (180).

5. The cooling bore guide (120) of claim 4, wherein the semicircular trough-like shape (180) comprises an open end (190).

6. The cooling bore guide (120) of claim 3, wherein the elongated sleeve (160) comprises a grove (200) therein.

7. The cooling bore guide (120) of claim 1, wherein the cutter guide (130) comprises a sleeve base (170).

8. The cooling bore guide (120) of claim 7, wherein the sleeve base (170) comprises a tube fitting (210) in communication with an air hose (220).

9. The cooling bore guide (120) of claim 7, wherein the sleeve base (170) comprises a sleeve bearing (240) therein.

10. The cooling bore guide (120) of claim 1, wherein the guide lock (140) comprises a guide locking sleeve (260).

11. The cooling bore guide (120) of claim 10, wherein the guide lock (140) comprises a guide lock screw (270) positioned within the guide locking sleeve (260).

12. The cooling bore guide (120) of claim 1, further comprising a reaming tool (300) positioned within the cutter guide (130).

13. The cooling bore guide (120) of claim 1, wherein the enlarged portion (100) comprises a half moon shape (110).

14. The cooling bore guide (120) of claim 1, wherein the enlarged portion (110) comprises an enlarged diameter of about five to about twenty percent of a diameter of the cooling bore (280).

15. A method of enlarging a cooling bore (280) in a rotor (45) of a turbine (10), comprising:
positioning a cutter guide (120) in the cooling bore (280);
positioning a guide lock (130) in an adjacent cooling bore (290);
locking the guide lock (130) within the adjacent cooling bore (290);
inserting a reaming tool (300) within the cutter guide (120); and
reaming the cooling bore (280) to create an off-center enlarged portion (100).
